# EUROPEAN PATENT APPLICATION

(11) **EP 1 541 205 A1**
(43) Date of publication of application: **15.06.2005**
(21) Application number: 03795254.6
(22) Date of filing: 29.08.2003
(51) Int. Cl.: A63F 13/00, A63F 13/10, A63F 13/12

(54) **GAME DEVICE, GAME DEVICE CONTROL METHOD, PROGRAM, AND PROGRAM DISTRIBUTION DEVICE**

(30) Priority: 30.08.2002 JP 2002255559
(71) Applicant: Konami Corporation, Chiyoda-ku, Tokyo 100-6330 (JP); Konami Computer Entertainment Tokyo, Inc., Tokyo 104-6041 (JP)
(72) Inventor: TERASHI, Norihiro, Konami Computer Entertainment, Chuo-ku, Tokyo 104-6041 (JP); HASUNUMA, Mitsuo, Saitama-shi, Saitama 330-0061 (JP)
(74) Representative: Winter, Brandl, Fürniss, Hübner, Röss, Kaiser, Polte Partnerschaft Patent- und Rechtsanwaltskanzlei
(86) International application number: PCT/JP2003/011071
(87) International publication number: WO 2004/024262

(57) **Abstract**

A game device, game control method and program capable of increasing the fun level of a selection operation is provided. An option storage unit (52) stores depth information correspondingly to each of a plurality of options. A reference depth information setting unit (54) sets reference depth information. An option display unit (56) displays at least one of said plurality of options on an option guide screen based on reference depth information and depth information corresponding to each option. When a deciding operation with respect to operating means is performed, a game control unit (58) controls the game based on one or a plurality of options corresponding to the reference depth information.

## Description

### TECHNICAL FIELD

The present invention relates to a game device, control method for a game device, program, and program distribution device, and relates to a game device, a control method for a game device, a program, and a program distribution device capable of increasing, for example, the fun level of a selection operation.

### BACKGROUND ART

Games exist where an arbitrary choice is made from choices displayed by a player, with the game then proceeding according to this selected content. With this kind of game, for example, words that a player character (a game character that is operated by a player) uses to talk to other game characters or actions that a player character undertakes etc. are displayed as choices.

In the above games, it is typical for all of the options to be displayed in a plane (two-dimensional) manner as a list. As a result, the selection operation is in itself not interesting.

The present invention has been conceived in view of the above, and aims to provide a game device, game control method, program, and program distribution device capable of increasing the fun level of a selection operation.

### DISCLOSURE OF THE INVENTION

In order to resolve the aforementioned problems, a game device of the present invention comprises option storage means for storing depth information correspondingly to each of a plurality of options; reference depth information setting means for setting reference depth information; option displaying means for displaying at least one of the plurality of options stored in the choice storage means on an option guide screen based on reference depth information set by the reference depth information setting means and depth information corresponding to each options; and game control means for controlling a game based on one or a plurality of options corresponding to reference depth information set by the reference depth information setting means when a deciding operation with respect to an operating means is performed. Means for, when there is no deciding operation with respect to an operating means, carrying out game control of content accordingly may also be comprised.

A control method for game device of the present invention comprises an option storage step of storing depth information correspondingly to each of a plurality of options; a reference depth information setting step for setting reference depth information; an option displaying step for displaying at least one of the plurality of options stored in said option storage means on an option guide screen based on reference depth information set in the reference depth information setting step and depth information corresponding to each option; and a game control step for controlling a game based on one or a plurality of options corresponding to reference depth information set in the reference depth information setting step when a deciding operation with respect to an operating means is performed.

Further, a program of the present invention is a program for having a computer such as a home-use game machine, business use game machine, portable game machine, mobile telephone, or personal computer taken as a game device to function as option storage means for storing depth information correspondingly to each of a plurality of options; reference depth information setting means for setting reference depth information; option displaying means for displaying at least one of the plurality of options stored in the option storage means on an option guide screen based on reference depth information set by the reference depth information setting means and depth information corresponding to each option; and game control means for controlling a game based on one or a plurality of options corresponding to reference depth information set by the reference depth information setting means when a deciding operation with respect to an operating means is performed.

Moreover, a program distribution device of the present invention is for distributes a program for having a computer to function as a game device, and comprises an information storage medium recorded with the program for having the computer to function as option storage means for storing depth information correspondingly to each of a plurality of options; reference depth information setting means for setting reference depth information; option displaying means for displaying at least one of the plurality of options stored in the option storage means on an option guide screen based on reference depth information set by the reference depth information setting means and depth information corresponding to each option; and game control means for controlling a game based on one or a plurality of options corresponding to reference depth information set by the reference depth information setting means when a deciding operation for an operating means is performed. The program distribution device reads the program from the information storage medium and distributes the program, collectively or divided into parts.

Further, collective distribution is distribution, for example, where the whole of a program is distributed all together. Further, distribution in parts is, for example, distributing parts of the program as required according to a phase of a game.

In the present invention, the depth information are stored correspondingly to each of a plurality of options. The reference depth information can then be set. Here, setting of the reference depth information may be performed by a setting operation (operation of setting reference depth information) with respect to operating means such as a controller etc. or may be performed automatically. At least one of the plurality of stored options can be displayed at an option guide screen based on reference depth information and depth information corresponding to each option. When a deciding operation takes place with respect to operating means, the game is controlled according to one or a plurality of options corresponding to the reference depth information.

According to the present invention, depth information is made to correspond to each option, and each option is displayed based on reference depth information and depth information correlated to each option. It is therefore possible to change the displaying of the options. As a result, the level of interest involved in the selection operation is increased.

Further, in an aspect of the present invention, the option displaying means comprises means for displaying at least one of the plurality of options on the option guide screen in sizes based on reference depth information set by the reference depth information setting means and depth information corresponding to each option. In doing this, each option can be displayed at a size based on the reference depth information and depth information correlating to each option. The relationship between the current reference depth information and the depth information correlating to each option can therefore be intuitively understood from the size of each option.

Further, in an aspect of the present invention, the option displaying means comprises means for displaying at least one of the plurality of options on the option guide screen with brightness based on reference depth information set by the reference depth information setting means and depth information corresponding to each option. In doing this, each option can be displayed at a brightness based on the reference depth information and depth information correlating to each option. The relationship between the current reference depth information and the depth information correlating to each option can therefore be intuitively understood from the brightness of each option.

Further, in an aspect of the present invention, the option displaying means comprises means for displaying at least one of the plurality of options on the option guide screen with transparency based on reference depth information set by the reference depth information setting means and depth information corresponding to each option. In doing this, each option can be displayed transparent to an extent based on the reference depth information and depth information correlating to each option. The relationship between the current reference depth information and the depth information correlating to each option can therefore be intuitively understood from the extent of the transparency of each option.

Further, in an aspect of the present invention, the option displaying means comprises means for displaying at least one of the plurality of options on which is performed a blur processing with a degree of blur based on reference depth information set by the reference depth information setting means and depth information corresponding to each option on the option guide screen. Here, "blur processing" is the superposing of, for example, target characters and images that have been changed to be semi-translucency rate at a position offset from the target characters and images. In this case, the extent of the blur processing can be controlled using semi-transparency rate, distance (amount) of shifting from the target characters and images, and number of times of superposition (the number of characters and images which have been changed to be semi-transparent that are positioned about the periphery of the target), etc. In doing so, each option on which is performed a blur processing with a degree of blur based on the reference depth information and depth information correlating to each option, can be displayed. The relationship between the current reference depth information and the depth information correlating to each option can therefore be intuitively understood from the extent of the blur of each option.

Further, in an aspect of the present invention, the option displaying means comprises means for displaying at least one of the plurality of options on the option guide screen in colors based on reference depth information set by the reference depth information setting means and depth information corresponding to each option. In doing this, each option can be displayed in a color based on the reference depth information and depth information correlating to each option. The relationship between the current reference depth information and the depth information correlating to each option can therefore be intuitively understood from the color of each option.

Moreover, in one aspect of the present invention, the option displaying means comprises means for deciding display positions of at least one of the plurality of options displayed on the option guide screen based on reference depth information set by the reference depth information setting means and depth information corresponding to each option. In doing this, the display position of at least one of the plurality of options can be decided based on the reference depth information and depth information correlating to each option. The relationship between the current reference depth information and the depth information correlating to each option can therefore be intuitively understood from the display position of each option.

Further, in one aspect of the present invention, the option displaying means comprises means for not displaying at least one of the plurality of options on the option guide screen based on reference depth information set by the reference depth information setting means and depth information corresponding to each option. In doing this, it can be ensured that at least one of the options is not displayed based on the reference depth information and the depth information correlating to each option.

Further, in one aspect of the present invention, the option storage means further stores image information correspondingly to each of the plurality of options, and the choice displaying means displays one or a plurality of images correlated with each option displayed on the option guide screen based on image information corresponding to each option. In doing this, one or a plurality of images stored correspondingly to each option can be displayed in a manner correlating with each option. As a result, it is possible to display options in a still more preferable manner.

Further, in one aspect of the present invention, the option storage means further stores time limit information correspondingly to each of the plurality of options, the option displaying means displaying at least one of the plurality of options on the option guide screen further based on time limit information corresponding to each option. Here, the time limit information may include, for example, information indicating the maximum time for which an option is selectable, information indicating the time remaining for which an option is selectable, and information indicating a rate by which time for which an option is selectable is reducing (speed at which time is running out). As a result of doing this, time limit information is set correlating with each option, so that a player's feeling of tension can be increased.

Further, in one aspect of the present invention, the option displaying means displays time limit information corresponding to each option displayed on the option guide screen correlating with each option. In doing so, time limit information stored correlating with each option is displayed correlating with each option, so that a player can be made aware of time limit information for each option.

Further, in one aspect of the present invention, the option displaying means displaying at least one of the plurality of options on the option guide screen in colors based on time limit information corresponding to each option. In doing so, each option can be displayed using colors based on time limit information correlating with each option, so that the player can be made aware of time limit information for each option using the color of each option.

Further, in one aspect of the present invention, when setting of the reference depth information is performed such that one or a plurality of options decided by the deciding operation change, time limit information is set such that the time when the setting is performed is taken as a reference point for one or a plurality of options corresponding to the reference depth information. Reference time is the time from which counting (measurement) of the time limit starts. In doing so, the time at which reference depth information is set can be made to be a reference time relating to one or a plurality of option corresponding to the reference depth information. Namely, the game-like qualities of the selection of options can be increased because the time at which the count for the time limit starts is set for each option.

### BRIEF DESCRIPTION OF THE DRAWINGS

FIG. 1 is a view showing a hardware configuration for a game device of an embodiment of the present invention.
FIG. 2 is a view showing an example of a controller.
FIG. 3 is a block view showing functions of a game device of an embodiment of the present invention.
FIG. 4 is a view showing an example of an option information table.
FIG. 5 is a view showing an example of a game screen.
FIG. 6 is a view showing an example of a game screen.
FIG. 7 is a flowchart showing an option guide screen display process for the game device of the embodiment of the present invention.
FIG. 8 is a view showing an overall configuration for a program distribution system of a further embodiment of the present invention.

### BEST MODE FOR CARRYING OUT THE INVENTION

The following is a detailed description based on the drawings of embodiments of the present invention.

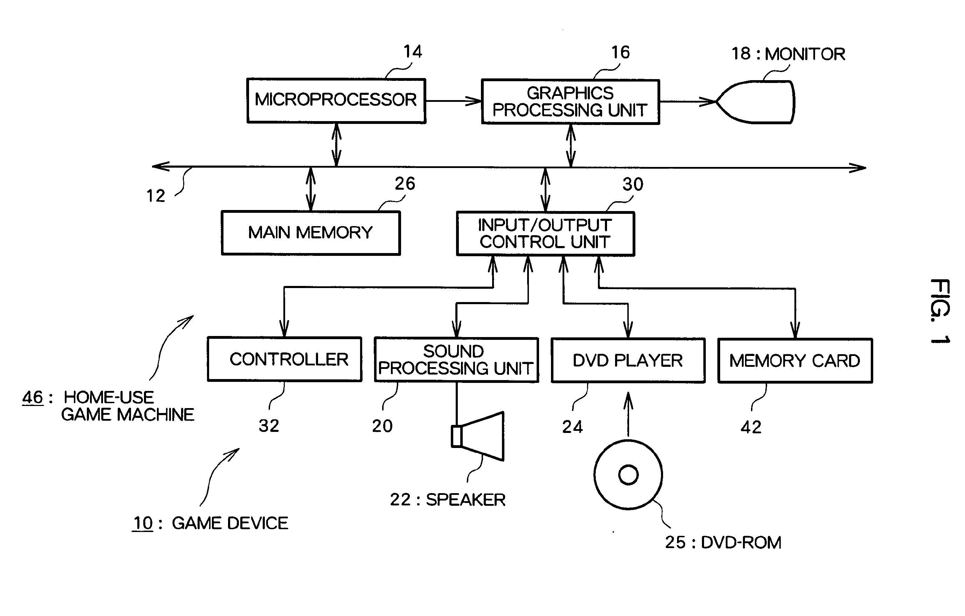

FIG. 1 is a view showing a hardware configuration for a game device of each embodiment of the present invention. In FIG. 1, a game device 10 is configured by installing a DVD (trademark)-ROM 25 and a memory card 42 constituting information storage media in a home-use game machine 46 connected to a monitor 18 and a speaker 22. A household television is used as the monitor 18, and speakers incorporated into the television used as the speakers 22. Further, a DVD-ROM 25 is used to supply the program to the home-use game machine 46 but any other information storage media such as CD-ROMs or ROM cards etc. may also be used. Moreover, the program may also be supplied to the home-use game machine 46 from a remote location via a data communication network such as the Internet, etc.

The home-use game machine 46 is a well-known computer game system including a microprocessor 14, graphics processing unit 16, main memory 26, input/output control unit 30, sound processing unit 20, controller 32, and DVD-ROM player 24. The microprocessor 14, graphics processing unit 16, mainmemory 26, and input/output control unit 30 are connected so as to be capable of mutual data communication using a bus 12, with the controller 32, sound processing unit 20, DVD-ROM player 24 and memory card 42 being connected to the input/output control unit 30. Each structural element of the home-use game machine 46 other than the controller 32 is housed in a case.

The microprocessor 14 controls the respective elements of the home-use game machine 46 based on an operating system stored in a ROM (not shown), a program read from the DVD-ROM 25, and saved data read from the memory card 42, and presents the game to the player. The bus 12 is for exchanging addresses and data among the respective elements of the home-use game machine 46. The main memory 26, for example, has a configuration including RAM, which is written with programs read out from the DVD-ROM 25 and saved data read out from the memory card 42 as necessary. The main memory 26 can also be used in operations of the microprocessor 14. The graphics processing unit 16 has a configuration including VRAM. The graphics processing unit 16 receives image data from the microprocessor 14, draws a game screen image on the VRAM based on the received data, and converts this content to a video signal, and output the signal to the monitor 18.

The input/output control unit 30 is an interface enabling the microprocessor 14 to access the controller 32, the sound processing unit 20, the DVD-ROM player 24, and the memory card 42. The sound processing unit 20 includes a sound buffer and reproduces music data, game sound effects and audio messages, and so on, which is reads out from the DVD-ROM 25 and stored in the sound buffer, and outputs sound via the speaker 22. The DVD-ROM player 24 reads programs recorded on the DVD-ROM 25 in accordance with instructions from the microprocessor 14. The controller 32 is a general-purpose operation input means for enabling a player to input various game operations. The memory card 42 includes non-volatile memory (for example, EEPROM) and is detachable from the home-use game machine 46. Saved data for various games etc. is stored at the memory card 42.

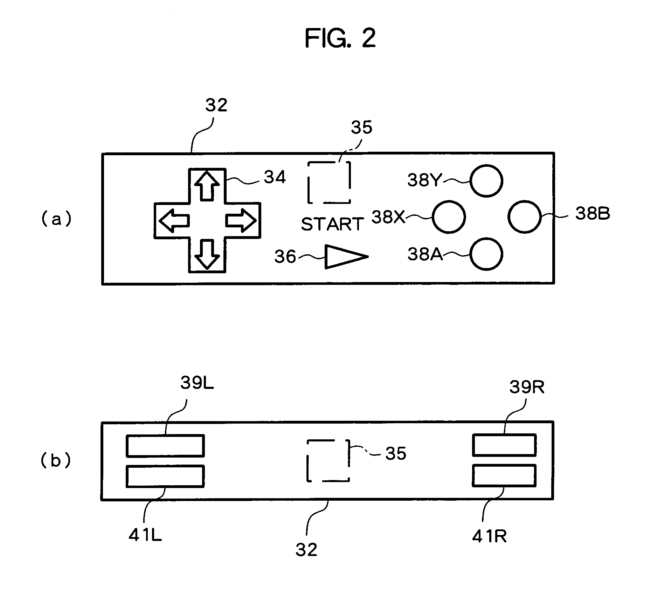

FIG. 2 shows an example of the controller 32. The controller 32 shown in FIG. 2 is a general-purpose game controller, and as shown in FIG. 2(a), is equipped with a direction button 34, start button 36, and buttons 38X, 38Y, 38A and 38B. In FIG. 2(b), buttons 39L, 39R, 41L and 41R are provided on the rear surface. Namely, at the top side surface of the controller 32, buttons 41L, 41R are provided at the left and right side of the upper half, and buttons 39L and 39R are provided on the left and right sides of the lower half. The direction button 34 on the front surface has a cross-shape, and is usually used for setting the direction of movement of characters or a cursor. The start button 36 is a small, triangular, push-button, and is usually used for starting games or forcing a game to end. The buttons 38X, 38Y, 38A, 38B, 39L, 39R, 41L and 41R are used in other game operations. Here, the button 41L and the button 41R are used to set (change) reference depth, and the button 38B is used for deciding options.

Further, an oscillator 35 is built into the controller 32. The oscillator 35 is configured from, for example, a piezoelectric element or a motor with an eccentric weight etc., and is operated according to an oscillation on command provided to the controller 32 from the microprocessor 14 so as to oscillate the controller 32. Further, operation is stopped according to an oscillation off command supplied to the controller 32 from the microprocessor 14.

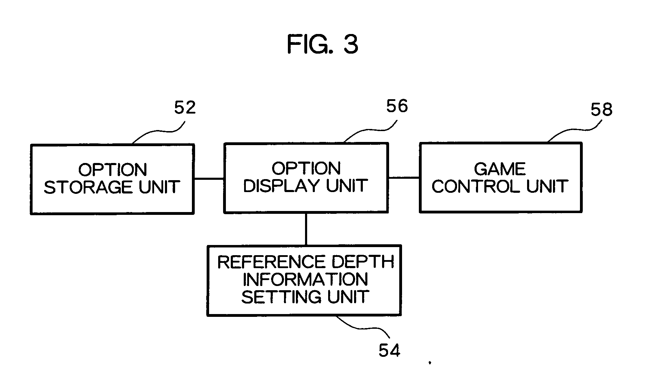

FIG. 3 is a view showing functional blocks implemented at the game device 10 centering on those to which the present invention is related. The functions shown in the same drawings can be realized as a result of the game device 10 executing game programs. As shown in the drawings, the game device 10 comprises an option storage unit 52, a reference depth information setting unit 54, an option display unit 56, and a game control unit 58.

The option storage unit 52 may be implemented by, for example, a DVD-ROM 25, or main memory 26 or memory card 28. The option storage unit 52 stores depth information correspondingly to each of a plurality of options. Here, depth information is, for example, sequence information for from towards the front of the screen towards the back, or information based on position information occurring in a virtual game space. Further, the option storage unit 52 may also further store image information and time limit information in a manner corresponding to each of a plurality of options. Further, when reference depth information is set by the reference depth information setting unit 54 as a reference such that one or a plurality of options decided by a deciding operation (pressing of the button 38B) changes, time limit information is set such that the time when the setting is performed is taken as a reference point for the option(s) corresponding to the reference depth information. For example, after an option guide screen is displayed, a time where, in the beginning, an option becomes an option (an option that is a selection target or an option corresponding to reference depth) decided as a result of a deciding operation (pressing of button 38B) may be taken as a reference time for the option.

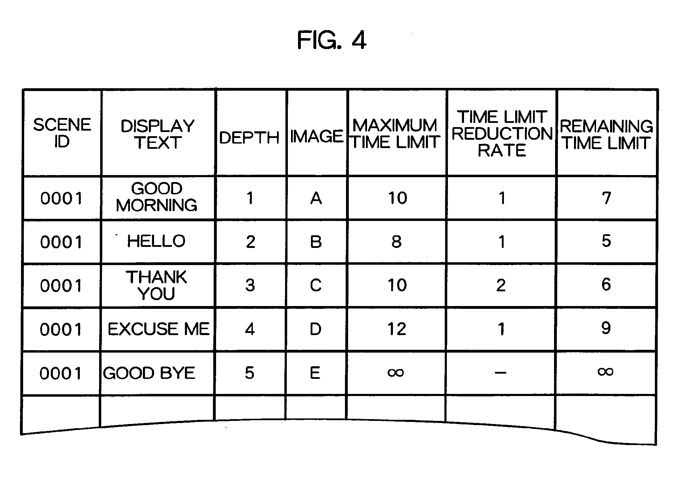

The kind of option information table shown, for example, in FIG. 4 is stored at the option storage unit 52. As shown in the drawing, an option information table contains a scene ID, display text, depth, image, maximum time limit, time limit reduction rate, and remaining limited time field. The scene ID shows information for identifying a game scene (scene). The display text (option) is characters (words) displayed on the game screen as option. Here, image shows information (for example, image file names and image file paths etc.) relating to images displayed in a manner correlating to the options. According to the same drawing, five options of "good morning", "hello", "thank you", "excuse me" and "good bye" are displayed in scene "0001".

Depth (depth information) shows sequence information in a direction from the front of the screen towards the back. Namely, according to the same drawing, depth is set in the order of "good morning", "hello", "thank you", "excuse me" and "good bye". Further, here, it is ensured that depth with respect to options does not overlap for each scene. Namely, in each scene, the options and depths have a one-to-one relationship.

The maximum time limit indicates the maximum time for which it is possible to select options. When time based on the maximum time limit elapses, receipt of the deciding operation (pressing of the button 38B) to select the option is refused. At this time, it is preferable to arrange for deleting of the options from the screen or for the options to be displayed in a state where selection is not possible. Here, the maximum time limit is shown in units of seconds. For example, ten seconds for the option "good morning", eight seconds for the option "hello", and infinity for the option "good bye" are set as maximum time limits. A setting of infinity for an option indicates that there is no time limit for that option. Here, a description is given where the time instruction is carried out in seconds but time may also be specified by all information that increases or decreases the advancement of time such as other loop numbers or counter values, etc.

The time limit reduction rate indicates a speed at which time remaining where it is possible to make a choice is reduced (running out). Here, the time limit reduction rate indicates a rate of reduction of every one second. For example, because a time limit reduction rate of "2" is set at the option "good morning", the actual time limit is five seconds when a maximum time limit of ten seconds is set. On the other hand, the actual time limit at the option "thank you" is ten seconds even though the same maximum time limit of ten seconds is set because the time limit reduction rate is set to "1".

The remaining time limit (remaining time limit information) indicates the time remaining in which it is possible to make a choice (remaining time limit). Here, the remaining time limit is shown in units of seconds. The remaining time limit is updated as the time that has elapsed from a prescribed reference time (for example, a time of displaying a game screen guiding selection, or a time where corresponding option is first displayed at a screen as selection targets, etc.). The example shown in the same drawings shows the remaining time limit for when three seconds have passed from the prescribed reference time. For example, the option "good morning" has a maximum time limit of ten seconds and a time limit reduction rate of two, and at this time therefore has four seconds of remaining time limit. When the remaining time limit becomes zero, an option can no longer be selected.

In the above, maximum time limit, time limit reduction rate, and remaining time limit are contained in an option information table correlating with each option as time limit information. As a result, the time limits for each option can be controlled using the maximum time limit and the time limit reduction rate. Because of this, it is possible to set a variety of time limits for each option so as to make the game more game-like. It is also possible to set the maximum time limit to be common for each option and set the time limit reduction rate for each option. Further, the time limit reduction rate may be common for each option and the maximum time limit may be set for each option. It is also possible to set the time limit for each option.

The reference depth information setting unit 54 is realized from both hardware and software centered on the microprocessor 14 and sets reference depth information. Here, reference depth information indicates depth information constituting a reference of deciding one or a plurality of options. For example, when the depth information is information indicating sequence information (layers) from towards the front of the screen to the back, the prescribed sequence may be taken as the reference depth information. Further, when depth information is information based on position information occurring in virtual game space, then information based on observation position may be taken as reference depth information. Setting of the reference depth information may be carried out by a setting operation (pressing of button 41L or 41R) with respect to the operating means (controller 32). At this time, the direction button 34 may be used in the setting operation. For example, when the depth information is information based on position information occurring in a virtual game space, the observation position is moved by operating the direction button 34 (gradually changed), and the reference depth information may then be set in response to this. Further, setting of the reference depth information may also be performed automatically regardless of the setting operation. For example, the reference depth information may be automatically generated every prescribed time.

The option display unit 56 is implemented by hardware and software centered on a graphics processing unit 16 and a monitor 18. At least one of a plurality of options stored at the option storage unit 52 are displayed at the option guide screen based on reference depth information set by the reference depth information setting unit 54 and depth information corresponding to each option (depth information stored in the option storage unit 52 in a manner correlating with each option).

For example, the option display unit 56 may display at least one of a plurality of options at the option guide screen using sizes, brightness, transparency, and colors based on a difference between reference depth information set by the reference depth information setting unit 54 and depth information corresponding to each option (hereinafter referred to as relative depth information). Further, the options on which is performed blur processing based on the relative depth information, may be displayed at the choice guide screen.

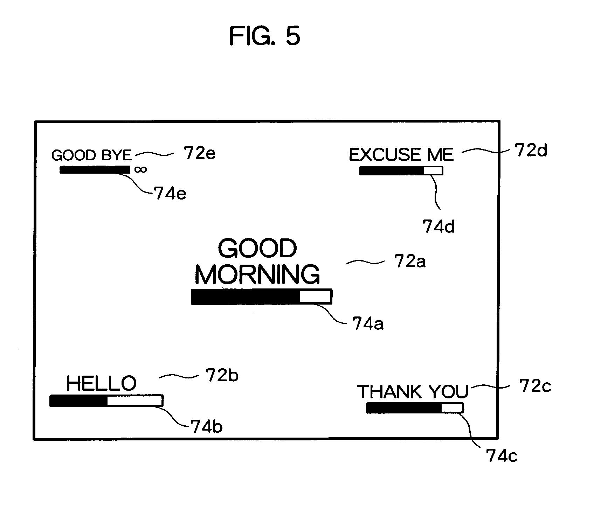

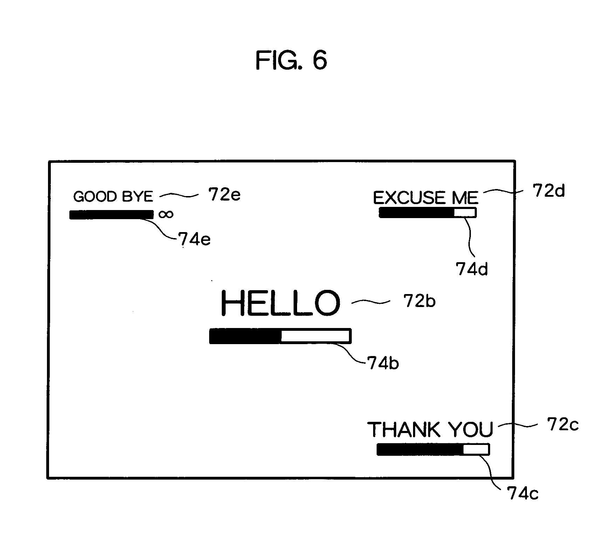

Moreover, the option display unit 56 may also decide display positions of at least one of a plurality of options displayed at the option guide screen based on the relative depth information. For example, one or a plurality of options corresponding to the reference depth information (one or a plurality of options decided upon by a deciding operation) may also be made to be always displayed at the center of the screen (refer to FIG. 5 and FIG. 6).

Further, the option display unit 56 may not display at least one of a plurality of options at the option guide screen based on the relative depth information. For example, one or a plurality of options for which the relative depth information becomes negative may be taken out of the frame while making their display size and transparency large (refer to FIG. 5 and FIG. 6).

Moreover, the option display unit 56 may then display one or a plurality of images correlating with each option displayed at the option guide screen based on image information corresponding to each option. Further, at least one of a plurality of options at the option guide screen may also be displayed further based on time limit information corresponding to each option. At this time, time limit information corresponding to each option may be displayed in a manner correlating with each option displayed at the option guide screen (refer to FIG. 5 and FIG. 6). Further, at least one of a plurality of options may also be displayed at the option guide screen using a color based on time limit information corresponding to each option.

The game control unit 58 is realized by hardware and software centered on the microprocessor 14, and when a deciding operation (pressing of the button 38B) is carried out for the operating means (controller 32), the game is controlled based on one or a plurality of options corresponding to the reference depth information set by the reference depth information setting unit 54. Specifically, when a decision operation takes place, an option corresponding to depth (information) that is greater than the reference depth (information) and the closest to the reference depth (information), is selected. Further, when a deciding operation has not taken place (for example, when a deciding operation has not taken place with respect to all of the options up to the elapsing of the lime limit), the game control unit 58 may then execute game control for content corresponding to this.

Next, a description is given of the operation of the game device 10. The game device 10 implements a game where a story progresses as a result of a player arbitrarily selecting words which the player character speaks to other game characters from a plurality of displayed options by executing a game program provided by a DVD-ROM 25 etc.

FIG. 5 and FIG. 6 are views showing an example of a game screen (option guide screen) displayed at a monitor 18 of the game device 10 of this embodiment. These screens are displayed based on the table shown in FIG. 4, and show the option guide screen relating to scene "0001" as an example.

FIG. 5 shows an example of an option guide screen. As shown in FIG. 5, options 72a to 72e are displayed at the option guide screen. Further, time gauges 74a to 74e are displayed correlating to the options 72a to 72e.

Display positions and display modes of the options 72a to 72e are decided based on the reference depth and depths corresponding to each option. An option guide screen for the state where the reference depth is "1" is shown in FIG. 5. Moreover, it is preferable for the reference depth to be made "1" at the time of a default display (initial display) for the option guide screen.

A plurality of screen patterns corresponding to the number of options displayed at the screen are prepared at the game device 10. The screen pattern is the manner in which one or a plurality of options are arranged (displayed) on the screen. When the number of displayed options is five, as corresponds, for example, with the screen pattern shown in FIG. 5, the options are displayed (arranged) at the center and the four corners of the screen. By preparing the screen pattern according to the number of displayed options, then the option guide screen can be optimized according to the number of options displayed so as to prevent displayed options from overlapping or becoming clustered.

Further, an option corresponding to the reference depth is displayed (arranged) at the center of the screen whatever the screen pattern. The option displayed at the screen center expresses the option for the selection target. As described previously, at the game device 10, the options and depths have a one-to-one relationship at each scene. The option that is the target of selection can therefore be changed by the player by carrying out an operation of changing reference depth.

In the option guide screen shown in the same drawing, option 72a, i.e. the option "good morning" corresponding to depth "1" of the options relating to scene "0001" is displayed at the center of the screen. Namely, the option "good morning" is the option targeted for selection. When the button 38B is pressed in this state (when a deciding operation takes place), the option "good morning" is decided upon. The game is then made to progress (is controlled) based on the content of this selection.

Further, options 72b to 72e that are options corresponding to depths other than the reference depth are displayed at the four corners of the screen based on the screen pattern described previously.

The options 72a to 72e are displayed in sizes based on the depth (hereinafter referred to as relative depth) of each option with respect to the reference depth. Specifically, when the relative depth becomes large, the size (display size) of the option becomes small. Namely, the display size becomes small in accordance with the depth in a direction from the front of the screen towards the back. As a result, display of the options is three-dimensional due to having depth, rather than being flat. The relative depth is such that, for example, if the option is "thank you" (option 72c), when the depth is "3" (refer to FIG. 4) and the reference depth is "1", the relative depth is "2".

In the above, a description is given where options 72a to 72e are displayed using sizes based on relative depth, but options 72a to 72e are displayed with brightness, transparency, degree of blur and color etc. based on relative depth. The display of the options can also be in a three-dimensional manner having depth rather than being flat. Moreover, a combination of these display modes may be adopted. For example, options 72a to 72e may be displayed using sizes and brightness based on the relative depth.

Further, timer gauges 74a to 74e are displayed in a manner correlating with the options 72a to 72e at the option guide screen shown in the same drawing. The timer gauges 74a to 74e are displayed based on the option information table (refer to FIG. 4). The timer gauges 74a to 74e show time limit information for options 72a to 72e, and the colored portions (black portions) indicate the remaining time limits. The colored portions also reduce with the passage of time from a prescribed reference time in accordance with the rate of reduction in the time limit for each option. When the colored portions disappear, the corresponding options also disappear. The timer gauges 74a to 74e are also displayed based on the display modes (for example, size, brightness, transparency, degree of blur, color) of the correlated options. Further, for the timer gauge 74e, as the maximum time limit for the correlated option "good bye" (option 72e) is "∞", then "∞" is displayed on the right side of the timer gauge, and the colored portion of the timer gauge 74e does not decrease.

The prescribed reference time may be taken to be the time the option guide screen is displayed. By doing this, the timer gauges 74a to 74e start to decrease according to the time limit reduction rate of each option from the time the option guide screen is displayed. Further, the prescribed reference time may be different for each option. In this case, for example, after the option guide screen is displayed, when a reference depth setting operation is performed (when the button 41R or button 41L is pressed) such that the option (option of selection target, option corresponding to reference depth) changes, if the option becomes the option for the selection target for the first time, the prescribed reference time of the option may be set the time when the reference depth setting operation is performed. In doing so, the starts in the decreasing of the time gauges are different for each option, and it is possible to make the game even more game-like.

In the above, a description is given where timer gauges 74a to 74e are displayed in a manner correlating to the options 72a to 72e but it is also possible for the colors of the options 72a to 72e themselves to change with time. For example, it is also possible for the colors of the options to change through "red", "yellow", "green" and "blue" with the passage of time. In this case, a gauge correlating color and elapsed time is displayed on the screen, with the gauge then making the player aware of colors for which there is a time limit remaining and colors for which there is no time limit remaining. Further, for example, characters for colors displayed initially in "red" may change (have white spaces) one character at a time to "white" with the passage of time. Moreover, options for which the maximum time limit is "∞" are displayed in the colors of the rainbow.

Further, images may also be displayed in correlation with the options 72a to 72e. For example, information relating to images corresponding to options is acquired from the option information table (refer to FIG. 4), and the image may be displayed in a manner correlating to the options. Further, for example, an image corresponding to option (option corresponding to reference depth) that is selection targets may be displayed on the whole screen. Moreover, it is also possible, for example, to display images in a correlated manner just for options, of the options displayed on the screen, for which the relative depth satisfies prescribed conditions. Further, it is also possible for images displayed in a manner correlating to the option to disappear when the option disappear (for example, when the time limit is exceeded).

At the game device 10, change of option for the selection target, i.e. setting of the reference depth, is carried out by pressing the button 41R and the button 41L. Therefore, when the button 41R is pressed (when an operation for setting reference depth information is performed) on the option guide screen shown in FIG. 5, the reference depth is changed from "1" to "2", and the option guide screen shown in FIG. 6 is displayed.

In a screen transition to the option guide screen shown in the same drawing, the option 72a is removed from the option guide screen. Namely, at the option guide screen shown in the same drawing, option 72a of depth "1" is not displayed because the reference depth is "2". At this screen transition, framing-out of the option 72a takes place while the option 72a becomes larger. Because of this, it is preferable to produce a situation where the player advances in a direction towards the back. At this time, if the option 72a is framed-out while increasing the transparency (semi-transparency rate), a situation where the player advances in a direction to the back is more appropriately produced.

When the option guide screen is displayed as shown in the same drawing, the option "hello" (option 72b) corresponding to the reference depth information "2" is moved so as to be pulled towards the center of the screen, with centering taking place while allowing an afterimage to remain. At this time, the timer gauge 74b is also similarly centered. Further, the options 72c to 72e are changed in such a manner as to be displayed in sizes (display sizes) based on relative depth with respect to the reference depth "2". At this time, the timer gauges 74c to 74e are also similarly changed.

In the above, in a screen transition to the option guide screen shown in the same drawing, a description is given where only the display position of the option 72b corresponding to a reference depth of "2" is changed, but the display positions of options 72c to 72e may also be changed. For example, it is also possible to change the appearance of the display positions by changing the display position of option 72c to the former display position of option 72b (display position of FIG. 5) and changing the display position of option 72d to the former display position of option 72e. Namely, the display positions of options displayed at the option guide screen may also be changed based on relative depth. Further, for example, a screen pattern corresponding to the number of displayed options may be re-acquired and the display positions of the options 72c to 72e changed according to the screen pattern. For example, in the above example, because the number of displayed options is reduced from "5" to "4", the option guide screen in the same drawing may be taken to be a screen based on a screen pattern corresponding to the number of displayed options "4".

When the button 41L is pressed (when an operation for setting reference depth information is performed) on the option guide screen shown in the same drawing, the reference depth is changed from "2" to "1", and the choice guide screen shown in FIG. 5 is displayed. At this time, the option 72a and the timer gauge 74a come into frame so as to be centered while becoming smaller. Further, the options 72b to 72e and the timer gauges 74b to 74e are displayed under the display mode of FIG. 5. Namely, at the game device 10, when the player presses the button 41R and the button 41L, a situation is produced where there is movement from the front of the screen to the back, or from the back to the front of the screen.

Moreover, at the option guide screen of the game device 10, when none of the options have been selected, a story is made to proceed accordingly. In other words, not selecting any option at all is also an option in itself. For example, FIG. 5 and FIG. 6 show an example of an option guide screen for selecting word which a player character speaks to other game characters, but in the case where no option is selected, then this may be taken as a selection of "say nothing", and the story may then proceed accordingly. Further, in, for example, cases where there is an option with a maximum time limit of "∞" within the options, when no option is selected, the option of a maximum time limit of "∞" may be forcibly selected.

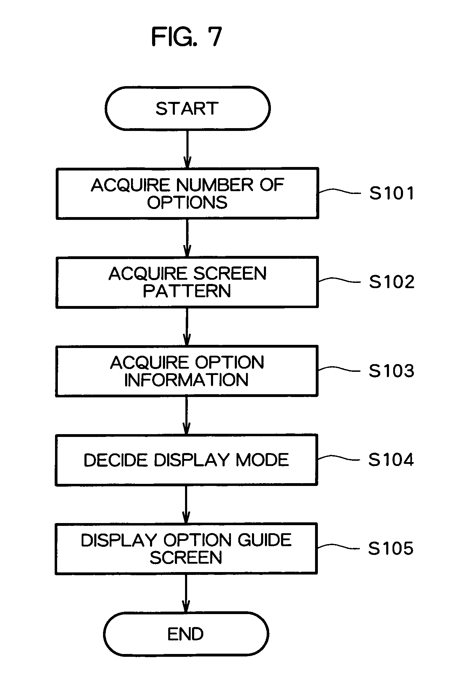

The following is a description of option guide screen display processing occurring at the game device 10. FIG. 7 is a flowchart showing this process. The process shown in the same drawing can be realized as a result of a program being executed at the game device 10.

As shown in the same drawing, first, the number of options relating to a target scene is acquired (S101). For example, if the target scene is "0001", then "5" is acquired from the option information table (FIG. 4) as the number of options.

Next, a screen pattern corresponding to the number of options acquired in S101 is acquired (S102). As described previously, a plurality of screen patterns correlating to the number of options are prepared (stored) at the game device 10. A screen pattern corresponding to the number of options acquired in S101 is then selected from these prepared screen patterns.

Next, option information (display text, depth, maximum time limit, time limit reduction rate, remaining time limit, image, etc.) relating to a target scene and the reference depth (reference depth information) are acquired (S103). Specifically, option information relating to a target scene is acquired by specifying, for example, a target scene ID "0001" in the option information table (FIG. 4).

Next, display modes for the options are decided (S104). These display modes (for example, size, brightness, transparency, degree of blur, color, etc.) are decided based on reference depths acquired in S103 and depths acquired in S103 for each option.

Next, the option guide screen is displayed (S105). The options acquired in S103 are displayed using the display modes decided in S104 based on the screen pattern acquired in S102. Further, the timer gauges correlated to the options are displayed based on display mode corresponding to each option acquired in S104.

According to the game device 10 described above, at the option guide screen, the options 72 to 77 are displayed based on reference depth and depth correlated to each choice (based on relative depth) . It is therefore possible to apply changes to the displaying of the options. As a result, the level of interest involved in the selection operation is increased.

The present invention is not limited to the above embodiment.

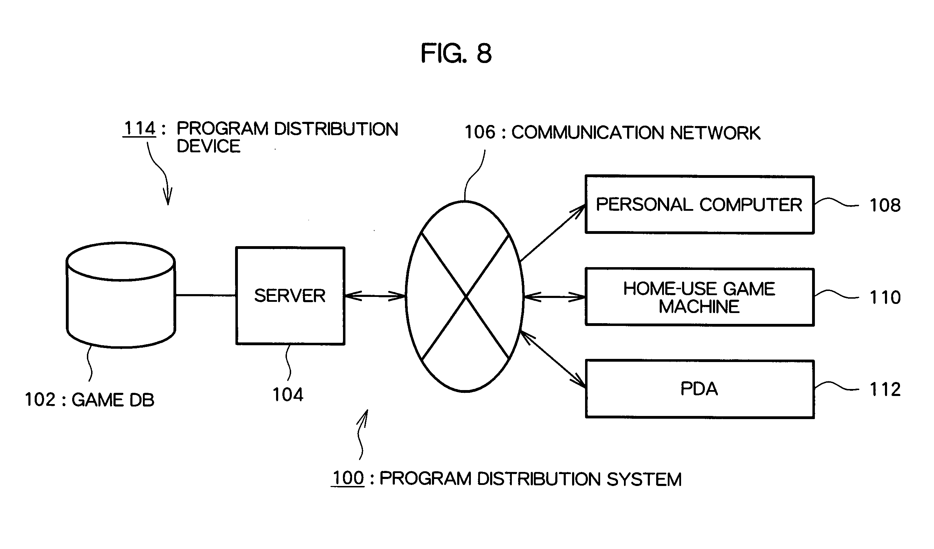

For example, in the above description, a program is supplied from an information storage media of a DVD-ROM 25 to a home-use game machine 46 but the program can also be distributed to each home etc. via a communication network. FIG. 8 is a view showing an overall configuration for a program distribution system using a communication network. A description is now given of a program distribution method of the present invention based on the same drawing. As shown in FIG. 8, this program distribution system 100 includes a game database 102, server 104, communication network 106, personal computer 108, home-use game machine 110, and PDA (Personal Digital Assistant) 112. Of these, a game program distribution device 114 is configured from the game database 102 and the server 104. The communication network 106 has a configuration of, for example, an Internet or a cable television network. With this system, the game database (information storage medium) 102 is stored with a program similar to the content stored in the DVD-ROM 25. A customer then makes a game distribution request using the personal computer 108, home-use game machine 110, or PDA 112 etc., and this is transmitted to the server 104 via the communication network 106. The server 104 reads the program from the game database 102 in response to the game distribution request and transfer them to the requesting entity, such as the personal computer 108, home-use game machine 110, or PDA 112 etc. Here, game distribution takes place in response to a game distribution request but transmission may also be one-way from the server 104. Further, it is by no means necessary for all of the program required for the implementation of the game to be distributed in one go (one-time distribution), and it is also possible to distribute necessary portions according to the phase of the game (divided distribution). If game distribution via this kind of communication network 106 is adopted, then it is straightforward for the customer to acquire the program.

### INDUSTRIAL APPLICABILITY

According to the present invention described above, at the option guide screen, the options are displayed based on reference depth information and depth information made to correspond to each of a plurality of options. It is therefore possible to apply changes to the displaying of the options. As a result, the level of interest involved in the selection operation is increased.

## Claims

**1.** A game device comprising:
option storage means for storing depth information correspondingly to each of a plurality of options;
reference depth information setting means for setting reference depth information;
option displaying means for displaying at least one of said plurality of options stored in said option storage means on an option guide screen based on reference depth information set by said reference depth information setting means and depth information corresponding to each option; and
game control means for controlling a game based on one or a plurality of options corresponding to reference depth information set by said reference depth information setting means when a deciding operation with respect to an operating means is performed.

**2.** The game device according to claim 1, wherein
said option displaying means comprises means for displaying at least one of said plurality of options on said option guide screen in sizes based on reference depth information set by said reference depth information setting means and depth information corresponding to each option.

**3.** The game device according to claim 1 or claim 2, wherein
said option displaying means comprises means for displaying at least one of said plurality of options on said option guide screen with brightness based on reference depth information set by said reference depth information setting means and depth information corresponding to each option.

**4.** The game device according to any one of claims 1 to 3, wherein
said option displaying means comprises means for displaying at least one of said plurality of options on said option guide screen with transparency based on reference depth information set by said reference depth information setting means and depth information corresponding to each option.

**5.** The game device according to any one of claims 1 to 4, wherein
said option displaying means comprises means for displaying at least one of said plurality of options on which is performed a blur processing with a degree of blur based on reference depth information set by said reference depth information setting means and depth information corresponding to each option on said option guide screen.

**6.** The game device according to any one of claims 1 to 5, wherein
said option displaying means comprises means for displaying at least one of said plurality of options on said option guide screen in colors based on reference depth information set by said reference depth information setting means and depth information corresponding to each option.

**7.** The game device according to any one of claims 1 to 6, wherein
said option displaying means comprises means for deciding display positions of at least one of said plurality of options displayed on said option guide screen based on reference depth information set by said reference depth information setting means and depth information corresponding to each option. 8. The game device according to any one of claims 1 to 7, wherein
said option displaying means comprises means for not displaying at least one of said plurality of options on said option guide screen based on reference depth information set by said reference depth information setting means and depth information corresponding to each option.

**9.** The game device according to any one of claims 1 to claim 8, wherein
said option storage means further stores image information correspondingly to each of said plurality of options, and
said option displaying means displays one or a plurality of images correlating with each option displayed on said option guide screen based on image information corresponding to each option.

**10.** The game device according to any one of claims 1 to claim 9, wherein
said option storagemeans further stores time limit information correspondingly to each of said plurality of options, and
said option displaying means further displays at least one of said plurality of options on said option guide screen based on time limit information corresponding to each option.

**11.** The game device according to claim 10, wherein
said option displaying means displays time limit information corresponding to each option displayed on said option guide screen correlating with each option.

**12.** The game device according to claim 10, wherein
said option displaying means displays at least one of said plurality of options on said option guide screen in colors based on time limit information corresponding to each option.

**13.** The game device according to any one of claims 10 to 12, wherein
when setting of the reference depth information is performed such that one or a plurality of options decided by the deciding operation change, time limit information is set such that the time when the setting is performed is taken as a reference point for said one or a plurality of options corresponding to the reference depth information.

**14.** A control method for game device comprising:
an option storage step of storing depth information correspondingly to each of a plurality of options;
a reference depth information setting step for setting reference depth information;
an option displaying step for displaying at least one of said plurality of options stored in said option storage means on an option guide screen based on reference depth information set in said reference depth information setting step and depth information corresponding to each option; and
a game control step for controlling a game based on one or a plurality of options corresponding to reference depth information set in said reference depth information setting step when a deciding operation with respect to an operating means is performed.

**15.** A program for having a computer to function as a game device, comprising:
option storage means for storing depth information correspondingly to each of a plurality of options;
reference depth information setting means for setting reference depth information;
option displaying means for displaying at least one of said plurality of options stored in said option storage means on an option guide screen based on reference depth information set by said reference depth information setting means and depth information corresponding to each option; and
game control means for controlling a game based on one or a plurality of options corresponding to reference depth information set by said reference depth information setting means when a deciding operation with respect to an operating means is performed.

**16.** A program distribution device for distributing a program for having a computer to function as a game device, wherein comprising an information storage medium recorded with said program for having said computer to function as:
option storage means for storing depth information correspondingly to each of a plurality of options;
reference depth information setting means for setting reference depth information;
option displaying means for displaying at least one of said plurality of options stored in said option storage means on an option guide screen based on reference depth information set by said reference depth information setting means and depth information corresponding to each option; and
game control means for controlling a game based on one or a plurality of options corresponding to reference depth information set by said reference depth information setting means when a deciding operation with respect to an operating means is performed,
said program distribution device reading said program from said information storage medium and distributing said program.

**17.** A computer-readable information storage medium for storing a program for having a computer to function as a game device, said program having said computer to function as:
option storage means for storing depth information correspondingly to each of a plurality of options;
reference depth information setting means for setting reference depth information;
option displaying means for displaying at least one of said plurality of options stored in said option storage means on an option guide screen based on reference depth information set by said reference depth information setting means and depth information corresponding to each option; and
game control means for controlling a game based on one or a plurality of options corresponding to reference depth information set by said reference depth information setting means when a deciding operation with respect to an operating means is performed.
